# EUROPÄISCHE PATENTSCHRIFT

(11) **EP 2 674 802 B1**
(45) Veröffentlichungstag und Bekanntmachung des Hinweises auf die Patenterteilung: **23.01.2019**
(21) Anmeldenummer: 13171216.8
(22) Anmeldetag: 10.06.2013
(51) Int. Cl.: G02B 23/14, F41G 1/38

(54) **Fernoptisches Gerät mit Steuerelektronik**
Remote optical apparatus with control electronics
Appareil optique à distance avec électronique de commande

(30) Priorität: 14.06.2012 AT 6872012
(43) Veröffentlichungstag der Anmeldung: 18.12.2013
(73) Patentinhaber: Swarovski-Optik KG., 6067 Absam (AT)
(72) Erfinder: WECHSELBERGER, Sandra, 6114 Weer (AT)
(74) Vertreter: Burger, Hannes

(56) Entgegenhaltungen:
- WO-A2-2009/039546
- DE-U1-202005 008 874
- US-A1- 2012 030 985
- US-B1- 7 624 528
- US-B1- 7 827 725

## Beschreibung

Die Erfindung betrifft ein fernoptisches Gerät, insbesondere ein Teleskop, eine Visiereinrichtung oder ein Zielfernrohr gemäß Oberbegriff des Patentanspruch 1 und eine abnehmbare Einheit für ein fernoptisches Gerät.

### Stand der Technik

Fernoptische Geräte wie Teleskope, Visiereinrichtungen oder Zielfernrohre werden in zunehmendem Maße mit Funktionalitäten ausgestattet, die die Bedienung des fernoptischen Gerätes für den Nutzer weiter erleichtern und die Einsatzmöglichkeiten bzw. Leistungswerte eines derartigen Gerätes erweitern bzw. verbessern sollen. Die Funktionselemente, die diese erweiterte Funktionalität ermöglichen, erfordern vielfach eine Steuerelektronik, die elektrische Verbraucher wie z.B. eine Absehenbeleuchtung oder eine Umfeldbeleuchtung bei einem Zielfernrohr steuern. Um die Funktion eines derartigen Verbrauchers zu aktivieren oder zu beeinflussen, sind im allgemeinen auch ein oder mehrere Bedienelemente erforderlich, mit denen der Nutzer die vom elektrischen Verbraucher vermittelte Funktion, die damit eine Funktion des fernoptischen Gerätes darstellt, beeinflussen kann. Aus dem Stand der Technik sind dazu bereits mehrere Lösungsansätze bekannt.

Das Dokument US 2012/030985 A1 beschreibt ein Zielfernrohr für eine Schusswaffe mit einer Wärmebild-Kamera. Diese Wärmebild- bzw. Infrarot-Kamera ist dabei als eine von dem Zielfernrohr trennbare modulare Einheit ausgebildet. In seinem mit dem Zielfernrohr verbundenen Zustand können Bilder der Infrarot-Kamera nach entsprechender Berechnung mit einer Grafikprozessoreinheit auf einem in dem Strahlengang des Zielfernrohrs integrierten Display dargestellt werden. Beim Blick durch das Okular des Zielfernrohres kann so einem Benutzer eine Überlagerung eines Bildes der Infrarot-Kamera mit dem natürlichen Bild im sonst sichtbaren Wellenlängenbereich des Lichtes angezeigt werden. Sowohl die modulare Einheit der Infrarotkamera als auch das Zielfernrohr weisen Schalter auf, mit denen die Helligkeit oder andere Parameter des Displays zur Darstellung des Wärmebildes eingestellt werden können.

Die AT 504 242 B1 offenbart ein fernoptisches Gerät, insbesondere ein Zielfernrohr, mit einem zwischen einer Energiequelle und einem elektrischen Verbraucher wirkenden Schaltorgan zur Aktivierung oder Einstellung einer vom elektrischen Verbraucher bewirkten Funktion des fernoptischen Gerätes durch einen Benutzer. Ein Bewegungselement ist am fernoptischen Gerät insbesondere an einem Okularabschnitt bewegbar gelagert. Das Schaltorgan ist dabei auf dem Bewegungselement angeordnet. In einer Ausführungsform ist das Bewegungselement mittels einer Schnappverbindung lösbar mit dem fernoptischen Gerät verbunden. Das Bewegungselement stellt mit seinen Schaltorganen und gegebenenfalls einer Anzeigevorrichtung lediglich eine Bedienschnittstelle für den Benutzer dar, beinhaltet jedoch keinerlei weitere Funktionen. Im abgenommenen Zustand weist das Bewegungselement keinerlei Funktionalität auf.

Zur Ansteuerung einer Absehenbeleuchtung eines Zielfernrohres offenbart die DE 20 2006 014 923 U1 eine Bedienplattform, die im Bereich des Okulars am Gehäuse des Zielfernrohres angeordnet ist. Die Bedienplattform trägt dazu mindestens zwei durch den Benutzer betätigbare Schalter. In Fachkreisen wird eine derartige Bedienplattform auch als Cockpit bezeichnet.

Die CN101017239A offenbart ein Zielfernrohr mit abnehmbarem Cockpit, das zwei von außen zugängliche Schaltknöpfe aufweist. Das Cockpit weist sehr eingeschränkte Funktionalität auf und kann dem Erfordernis nach hoher Flexibilität nicht genügen.

Der Katalog "Optisan® Japan's Secret Optics - Mamba series; The pre-hunter's choice - Low profile for high performance", Optc-015, April 2008, und die dazugehörige Bedienungsanleitung "User Manual - MTC Mamba" (www.mtcoptics.co.uk) offenbart ein Zielfernrohr mit einem abnehmbaren Cockpit, das zwei Bedienknöpfe aufweist. Das Cockpit weist sehr eingeschränkte Funktionalität auf. Funktionalitäten des Cockpits bzw. des Zielfernrohres können nicht verändert werden.

Diese Lösungen weisen zwar im Zusammenhang mit der Ergonomie und der Betätigung durch den Benutzer Vorteile auf. Als nachteilig ist jedoch die mangelnde Flexibilität des fernoptischen Gerätes zu sehen. Diese ist dadurch begründet, dass die dem fernoptischen Gerät innewohnenden Funktionalitäten nicht geändert bzw. individuellen Bedürfnissen angepasst werden können. Vielfach besteht jedoch Bedarf, ein bestehendes Gerät mit neuen Funktionalitäten auszustatten oder bestehende Funktionen individuell zu verändern. Außerdem besteht das Problem, dass bei Ausfall einer Funktionalität aufgrund einer schadhaften Komponente das gesamte fernoptische Gerät zur Reparatur eingeschickt werden muss. Folglich steht dem Benutzer das Gerät während der Reparaturphase nicht zur Verfügung, obwohl das Gerät mit eingeschränkter Funktionalität durchaus benutzbar wäre.

Aufgabe der Erfindung ist es daher, ein fernoptisches Gerät wie ein Teleskop, eine Visiereinrichtung oder ein Zielfernrohr bereitzustellen, mit dem Funktionalitäten des fernoptischen Gerätes auf einfache Weise verändert, wiederhergestellt und/oder erweitert werden können. Das fernoptische Gerät soll sich durch hohe Bedienungsfreundlichkeit auszeichnen und bevorzugt dem Benutzer die Möglichkeit eröffnen, bestehende Funktionalitäten selbst zu verändern und/oder das fernoptische Gerät um neue Funktionalitäten zu erweitern.

### Zusammenfassung der Erfindung

Diese Aufgabe wird durch ein fernoptisches Gerät der eingangs genannten Art mit den Merkmalen des Kennzeichenteils des Patentanspruches 1 gelöst, wonach die Steuerelektronik, insbesondere im abgenommenen Zustand der abnehmbaren Einheit, durch den Benutzer über mindestens ein an der abnehmbaren Einheit angeordnetes Bedienelement programmierbar ist. Dies erlaubt dem Benutzer ohne Hilfestellung des Herstellers und ohne Zuhilfenahme externer Geräte die Funktionalitäten des fernoptischen Gerätes zu verändern bzw. zu erweitern. Die abnehmbare Einheit stellt dadurch auch in funktioneller Hinsicht eine unabhängige Einheit dar.

Die Aufgabe wird auch gelöst durch eine abnehmbare Einheit für ein fernoptisches Gerät, insbesondere ein Teleskop, eine Visiereinrichtung oder ein Zielfernrohr, wobei die abnehmbare Einheit auf den Grundkörper des fernoptischen Gerätes aufsetzbar ist, dadurch gekennzeichnet, dass in der abnehmbaren Einheit eine Steuerelektronik zur Steuerung eines elektrischen Verbrauchers, insbesondere einer Absehenbeleuchtung, einer Umfeldbeleuchtung und/oder eines Messgerätes, integriert ist, wobei die Steuerelektronik, insbesondere im abgenommenen Zustand der abnehmbaren Einheit, durch den Benutzer über mindestens ein an der abnehmbaren Einheit angeordnetes Bedienelement programmierbar ist. Durch die Integration der Steuerelektronik in eine vom Grundkörper abnehmbare Einheit wird eine hohe Flexibilität geschaffen, was die Benutzung, Wartung und Nachrüstung eines fernoptischen Gerätes betrifft. Beispielsweise kann im Falle einer schadhaften Steuerelektronik, die abnehmbare Einheit gesondert zur Reparatur gegeben werden, während das fernoptische Gerät nach wie vor mit eingeschränkter Funktionalität verwendet werden kann. Im Falle eines Ausfalls der Steuerelektronik für die Absehenbeleuchtung eines Zielfernrohres kann das Zielfernrohr während der Dauer der Reparatur ohne Absehenbeleuchtung weiter benutzt werden. Der Grundkörper des fernoptischen Gerätes beinhaltet die Optik, also die optischen Komponenten, wie insbesondere Okular, Objektiv und gegebenenfalls ein Umkehrsystem.

Ein weiterer Vorteil besteht darin, dass die in der abnehmbaren Einheit integrierte Steuerelektronik nicht nur auf einem, sondern auch auf anderen fernoptischen Geräten eingesetzt werden kann. Umgekehrt könnten für ein und dasselbe fernoptische Gerät verschiedene abnehmbare Einheiten verwendet werden. So könnte der Händler für die Dauer der Reparatur vorübergehend eine Ersatz-Einheit zur Verfügung stellen.

Die Steuerelektronik ist vorzugsweise auf einer Platine angeordnet, die über eine Platinenbefestigung fest mit dem Gehäuse der abnehmbaren Einheit verbunden ist, wodurch die gesamte Konstruktion schussfest wird. Vorzugsweise ist die Platine, auf der die Steuerelektronik sitzt, im Wesentlichen parallel zur optischen Achse des Okulars ausgerichtet. Eine Befestigung der Platine auf der dem Grundkörper abgewandten Wand der abnehmbaren Einheit und/oder ihre Anordnung zwischen gegenüberliegenden Seitenwänden der abnehmbaren Einheit erhöhen die Schussfestigkeit der Konstruktion.

Besondere Aspekte im Zusammenhang mit fernoptischen Geräten betreffen insbesondere deren Beleuchtung und/oder Integration von Ballistik, Laser-Range-Findig bzw. anderen elektronischen Funktionalitäten und deren Integration in das fernoptische Gerät.

Gemäß der Erfindung ist in der abnehmbaren Einheit mindestens ein für den Benutzer zugängliches und mit der Steuerelektronik zusammenwirkendes Bedienelement zur Aktivierung bzw. Einstellung einer vom elektrischen Verbraucher bewirkten Funktion des fernoptischen Gerätes integriert. Dies ermöglicht es dem Benutzer, auch in abgenommenem Zustand der abnehmbaren Einheit über ein Bedienelement auf die Steuerelektronik einzuwirken, wodurch die Einheit auch dann Funktionalitäten bieten kann, wenn sie nicht mit dem Grundkörper des fernoptischen Gerätes verbunden ist. Dies ist insbesondere dann der Fall, wenn der Benutzer über die Bedienelemente in der Steuerelektronik enthaltene Funktionalitäten verändern kann.

Bevorzugt umfasst die abnehmbare Einheit mindestens eine, vorzugsweise in der Steuerelektronik integrierte Datenverarbeitungseinrichtung, insbesondere einen Mikroprozessor. Dies erlaubt es dem Benutzer, die Steuerelektronik auch zum Ausführen von Datenoperationen zu nutzen. Diese können sich auf die Performance des elektrischen Verbrauchers beziehen, aber auch auf eine davon unabhängige Funktion.

In einer möglichen Ausführungsform beinhaltet die Datenverarbeitungseinrichtung einen Ballistikrechner. Der Benutzer kann über die Bedienelemente ballistikbezogene Daten eingeben und erhält in Abhängigkeit seiner eingegebenen Daten Informationen z.B. über Abschusswinkel, Flugbahn, Einschusswinkel, etc.. Der Vorteil besteht darin, dass der Ballistikrechner auch in abgenommenen Zustand der abnehmbaren Einheit genutzt oder programmiert werden kann.

In einer bevorzugten Ausführungsform umfasst die abnehmbare Einheit mindestens einen vorzugsweise in der Steuerelektronik integrierten Datenspeicher. Dadurch wird ermöglicht, dass eingegebene Daten des Benutzers für spätere Anwendungen gespeichert werden können und/oder zum Auslesen durch einen Computer zur Verfügung stehen.

In einer weiteren möglichen Ausführungsform weist die abnehmbare Einheit mindestens eine Datenübertragungsschnittstelle auf, die mit der Steuerelektronik verbunden ist, wobei vorzugsweise die Datenübertragungsschnittstelle auf der dem Grundkörper zugewandten Seite der abnehmbaren Einheit angeordnet und im aufgesetzten Zustand der abnehmbaren Einheit unzugänglich ist. Dies ermöglicht die Kommunikation der abnehmbaren Einheit mit anderen Medien, insbesondere PCs. Die Datenübertragungsschnittstelle kann eine Drahtlosschnittstelle (z.B. Bluetooth, WLAN, etc.) oder eine kabelgebundene Schnittstelle (z.B. eine USB-Schnittstelle) sein. Die Flexibilität des fernoptischen Gerätes wird dadurch erhöht. Außerdem wird es dem Benutzer selbst möglich ist, auf einfache Weise die Funktionen des fernoptischen Gerätes auf seine Bedürfnisse abzustimmen.

In einer Weiterbildung ist das Bedienelement zur Programmierung der Steuerelektronik auf der im aufgesetzten Zustand dem Grundkörper zugewandten Seite der abnehmbaren Einheit angeordnet. Die zur Programmierung vorgesehenen Bedienelemente sind während des bestimmungsgemäßen Gebrauchs des fernoptischen Gerätes, z.B. eines Zielfernrohres während der Jagd unzugänglich und durch ihre Anordnung vor mechanischen Einwirkungen und Verschmutzung geschützt. Sie können daher kleiner und weniger robust ausgebildet sein als Bedienelemente, die im aufgesetzten Zustand der abnehmbaren Einheit von außen zugänglich sind.

Vorzugsweise ist der elektrische Verbraucher ein Messgerät, insbesondere ein Entfernungsmesser, und ist in der abnehmbaren Einheit eine Auswerteeinheit zur Auswertung der vom Messgerät generierten Messdaten integriert. Mit dieser Ausgestaltung können nicht nur elektrische Verbraucher angesteuert, sondern auch, wenn sie dazu ausgebildet sind, Messdaten im weitesten Sinne zu generieren, ausgelesen und ausgewertet werden. Dem Benutzer steht mit der abnehmbaren Einheit ein interaktives Tool zur Verfügung und er kann in Abhängigkeit der ausgewerteten Daten entsprechende Handlungen setzen und/oder die Steuerelektronik entsprechend umprogrammieren.

In der abnehmbaren Einheit ist eine Anzeigeeinrichtung, insbesondere ein Display, integriert, wobei die Anzeigeeinrichtung auf der dem Grundkörper zugewandten Seite der abnehmbaren Einheit angeordnet und im aufgesetzten Zustand der abnehmbaren Einheit verdeckt ist. Dies ermöglicht es dem Benutzer, Statusinformationen betreffend eines elektrischen Verbrauchers, gespeicherte Daten oder Datenverarbeitungsprozesse anzuzeigen. Bei einer Anordnung auf der dem Grundkörper zugewandten Seite ist die Anzeigevorrichtung vor mechanischen Einwirkungen und Verschmutzung geschützt. Vorzugsweise ist der elektrische Verbraucher innerhalb des Grundkörpers angeordnet ist. Dadurch kann die abnehmbare Einheit platzsparend gestaltet werden, während der üblicherweise langlebige und wartungsarme Verbraucher, insbesondere eine Absehenbeleuchtung, in geschützter Lage untergebracht ist.

Vorzugsweise weisen die abnehmbare Einheit und der Grundkörper jeweils eine elektrische Kontaktschnittstelle auf, die im aufgesetzten Zustand der abnehmbaren Einheit elektrisch leitend zusammenwirken, insbesondere zur Herstellung einer elektrischen Verbindung zwischen der abnehmbaren Einheit und dem elektrischen Verbraucher. Dies ermöglicht eine einfache lösbare elektrische Verbindung zwischen abnehmbarer Einheit und Verbraucher.

In einer Weiterbildung weist die Kontaktschnittstelle des Grundkörpers durch eine Wand des Grundkörpers gehende Kontaktdurchführungen auf, die mit entsprechend geformten Kontakten auf der dem Grundkörper zugewandten Seite der abnehmbaren Einheit elektrisch leitend zusammenwirken. Dies gewährleistet einen hohen Dichtigkeitsgrad.

In einer Weiterbildung ragen die Kontaktdurchführungen in eine an der Innenseite der Wand des Grundkörpers angrenzende Fassung, die vorzugsweise zusammen mit der Wand des Grundkörpers das Innere des fernoptischen Gerätes nach außen hin abdichtet. Dies erhöht die Dichtigkeit weiter, da die Fassung an der Stelle der Kontaktdurchführungen eine zusätzliche Abtrennung des Inneren des fernoptischen Gerätes nach außen hin darstellt.

In einer besonderen Weiterbildung führt eine mit den Kontaktdurchführungen verbundene, vorzugsweise flexible Platine ausgehend von der Fassung bis zum elektrischen Verbraucher. Dies stellt einen im Hinblick auf Kontaktdurchführungen, Fassung und Verbindungsleitung modulartigen Aufbau dar, der nicht nur einfach herzustellen, sondern auch zuverlässig und resistent gegenüber Erschütterungen ist.

Bevorzugt enthält die abnehmbare Einheit mindestens eine Energiequelle zur Versorgung des elektrischen Verbrauchers, wobei vorzugsweise die Energiequelle von der im aufgesetzten Zustand dem Grundkörper zugewandten Seite der abnehmbaren Einheit zugänglich ist. Ein Wechsel der Energiequelle, insbesondere einer Batterie, kann daher unabhängig vom Grundkörper erfolgen, bevorzugt durch Abnehmen der abnehmbaren Einheit.

Vorzugsweise weist die abnehmbare Einheit einen integrierten Akkumulator mit einer Ladeschnittstelle für eine Ladevorrichtung auf, wobei die Ladeschnittstelle vorzugsweise auf der dem Grundkörper zugewandten Seite der abnehmbaren Einheit angeordnet und im aufgesetzten Zustand der abnehmbaren Einheit unzugänglich ist. Dies ermöglicht wiederholtes Aufladen einer eingesetzten Energiequelle, wobei bevorzugt die Ladeschnittstelle auf der Unterseite der abnehmbaren Einheit vor Verschmutzung geschützt ist.

In einer besonders bevorzugten Ausführungsform ist die abnehmbare Einheit im Bereich des Okulars, vorzugsweise unmittelbar am Okularabschnitt des fernoptischen Gerätes, angeordnet ist. Dies ermöglicht dem Benutzer in unmittelbarer Nähe seines Gesichtes und daher in natürlicher und ergonomisch bevorzugter Armstellung das fernoptische Gerät zu betätigen. Überdies sind die Bedienelemente beim am Okular angesetzten Auge leicht zu orten. Ein weiterer Vorteil besteht darin, dass durch die Anordnung am Okular die optische Einstellmöglichkeit des Okulars z.B. durch eine daran umlaufend angeordnete Verstellschraube und die Bedienung eines elektrischen Verbrauchers räumlich konzentriert sind.

Bevorzugt weist die abnehmbare Einheit mindestens zwei gegenüberliegend angeordnete und in Richtung quer zur optischen Achse des Okulars voneinander beabstandete Bedienelemente auf. Eine gleichzeitige Betätigung mit Daumen und Zeigefinger wird dadurch wesentlich vereinfacht.

Vorzugsweise ist die abnehmbare Einheit in dem am Grundkörper aufgesetzten Zustand in einer vom Grundkörper gebildeten Befestigungsstruktur eingesetzt und nimmt dort eine relativ zum Grundkörper unveränderbare Lage. Die abnehmbare Einheit ist dadurch stationär am fernoptischen Gerät fixiert und kann nicht verschieben oder abfallen, z.B. bei Einwirkungen durch einen abgegebenen Schuss einer Waffe.

In einer bevorzugten Ausführungsform ist die abnehmbare Einheit durch einen lösbaren Verriegelungsmechanismus, vorzugsweise einen Schnappmechanismus, am Grundkörper befestigt ist, wodurch eine zuverlässige Fixierung am Grundkörper gewährleistet wird.

In einer Weiterbildung weist die abnehmbare Einheit zum Lösen des Verriegelungsmechanismus ein von außen zugängliches Entriegelungsorgan, wie einen Druckknopf, auf. Dadurch kann der Benutzer die Einheit auf einfache Weise abnehmen.

Bevorzugt ist die abnehmbare Einheit zwischen zwei vom Grundkörper abragenden und in Richtung der optischen Achse des Okulars voneinander beabstandeten Halteelementen eingesetzt. Dies gewährleistet eine besonders zuverlässige Fixierung, die resistent gegenüber entlang der optischen Achse wirkenden Kräften ist, insbesondere bei einem Rückstoß nach einem abgegebenen Schuss einer Waffe.

In einer Weiterbildung ist eines der Halteelemente in Form einer Nase ausgebildet und das andere Halteelement weist mindestens einen in Richtung der abnehmbaren Einheit ragenden, vorzugsweise konisch ausgebildeten Befestigungsstift auf, der mit der abnehmbaren Einheit mechanisch zusammenwirkt. Die Nase kann schmal und daher platzsparend ausgebildet werden, während die Befestigungsstifte im verriegelten Zustand für eine zusätzliche Verspreizung sorgen, was sich insbesondere bei starken Stoßkräften bewährt hat.

Bevorzugt ist das Gehäuse der abnehmbaren Einheit mit dem Grundkörper über eine Dichtung verbunden, die den Bereich zwischen Grundkörper und abnehmbarer Einheit nach außen hin abdichtet. Diese Maßnahme schützt den Bereich zwischen der abnehmbaren Einheit und dem Grundkörper und damit an der Unterseite der abnehmbaren Einheit angeordnete funktionelle Elemente, wie Bedienelemente, Anzeigevorrichtung, Schnittstellen, etc.

In einer Weiterbildung ist die Dichtung in Form eines elastischen Überzuges, vorzugsweise eines Gummi-Überzuges, auf der dem Grundkörper zugewandten Seite des Gehäuses der abnehmbaren Einheit ausgebildet. Die abnehmbare Einheit übernimmt dadurch auch die Funktion der Dichtung. Eine Dichtung als gesonderter und leicht zu verlierender Teil ist daher nicht nötig.

Vorzugsweise ist das Gehäuse der abnehmbaren Einheit aus Kunststoff gefertigt, eine Lösung, die sich durch besonders geringes Gewicht auszeichnet.

Im Folgenden werden weitere Vorteile der Erfindung und ihrer Ausführungsformen beschrieben:
Ein Problem bei derzeit gebauten Bedieneinheiten, auch Cockpits genannt, besteht allgemein darin, dass nicht mehr Platz für Bedienelemente oder eine größere Batterie besteht. Frästechnisch kann aus dem vorhandenen Material nicht mehr Volumen ausgehöhlt werden, ohne dass auf der Außenseite des Cockpits Löcher entstehen, die verschlossen werden müssten oder das Design an sich stören würden.

Zur Unterbringung diverser Anzeige-, Bedien- und Schnittstellenelemente können an der Unterseite der abnehmbaren Einheit, die keine primäre Sichtfläche darstellt, ohne weiteres mehrere technische Ausnehmungen gemacht werden, die das Design und die Außensichtfläche des Gerätes nicht stören. Diese so entstandene Fläche gibt Raum um technisch sinnvolle Funktionalitäten unterzubringen, ohne das Aussehen des Zielfernrohrs zu beeinträchtigen.

Ebenso können hier mehrere, größere oder andersförmige Zugangslöcher zum Inneren der abnehmbaren Einheit gemacht werden, die z.B. bei einem Vollaluminium-Frästeil nicht möglich wären, da sie fertigungstechnisch nicht herstellbar wären. Somit gibt die neu erfundene Lösung technisch viele Freiheiten.

Im Falle, dass die Beleuchtungseinheit beim Kunden kaputt wird, muss dieser nicht mehr das komplette fernoptische Gerät von der Waffe demontieren und zur Reparatur einschicken. Er kann den Grundkörper des fernoptischen Gerätes auf der Waffe belassen und inzwischen ohne Steuerelektronik (und z.B. ohne Absehenbeleuchtung, nur mit einer mitgelieferten, funktionslosen Abdeckung) weiterjagen.

Reparaturen der abnehmbaren Einheit sind schneller und kostengünstiger, da keine aufwendige Demotage von Waffe bzw. Grundkörper durchgeführt werden muss.

Es ist möglich, z.B. bei einem "Heavy Hunter Upgrade" nur die abnehmbare Einheit zu aktualisieren. So können schneller neue Beleuchtungsfeatures oder andere Features eingebaut werden, ohne das Konzept des gesamten Zielfernrohres umzubauen.

Ein Benutzer, dem die abnehmbare Einheit in Form eines Cockpits zu groß ist, könnte sie, wenn nicht benötigt, abnehmen und das fernoptische Gerät nur mit einer niedrigeren bzw. flacheren Schutzabdeckung verwenden.

Die abnehmbare Einheit könnte mit verschiedensten Zusatzfeatures aufgerüstet werden, es könnte auch in weiterer Folge als Zubehör eine zusätzliche abnehmbare Einheit angeboten werden.

Zusätzliche Funktionalitäten wären z.B. Ballistikkorrekturanzeige/-rechner gegebenenfalls mit Display, vorzugsweise aufsteckbarer Laserentfernungsmesser, längere Beleuchtungslebensdauer durch einen integrierten Akku, oder beliebig angeordnete Bedienelemente. Auch ist es möglich, diese Konzepte in weiterführenden Projekten zu verwenden, z.B. als Platz für Programmierelemente (Eingabe von Ballistikdaten); Bedienelemente verschwinden in der Trennfläche zur abnehmbaren Einheit und sind somit geschützt, wenn sie nicht benötigt wird; Raum für größere Batterien; als abnehmbare, an den Computer ansteckbare Einheit, um gegebenenfalls direkt aus einem Ballistikprogramm Daten in das fernoptische Gerät zu übernehmen; zusätzliche Elektronikfeatures.

Die abnehmbare Einheit könnte das Problem der Abdichtung nach außen auch dadurch lösen, dass jene Teile die nicht funktionsrelevant sind, generell nicht abgedichtet werden (z.B. der Kantenbereich, an dem die abnehmbare Einheit und der Okularabschnitt aus mehr oder weniger designmäßigen Gründen überlappen). Ein dichtender Überzug könnte hier zusätzlich auf die abnehmbare Einheit aufgeklebt werden.

Weitere Möglichkeiten ergeben sich durch die modulare Gestaltung, weil z.B. die Absehenbeleuchtung als Zusatz verkauft werden könnte, wobei die Energiequelle in der abnehmbaren Einheit angeordnet sein würde.

Eine weitere Möglichkeit besteht darin eine Einschussweiteneinblendung über die abnehmbare Einheit zu bewerkstelligen, oder, dass die einschießende Person die Einschussdistanz über diese Einheit bzw. darunterliegende Bedienelemente eingeben kann.

Die Erfindung wird im nachfolgenden anhand der in den Zeichnungen dargestellten Ausführungsbeispiele näher beschrieben.

### Kurzbeschreibung der Zeichnungen

Es zeigen jeweils in vereinfachter, schematischer Darstellung:
- Fig. 1: ein fernoptisches Gerät in Form eines Zielfernrohres mit einer abnehmbaren Einheit;
- Fig. 2: den Okularabschnitt eines fernoptischen Gerätes mit einer abnehmbaren Einheit;
- Fig. 3: einen Schnitt durch den Okularabschnitt eines erfindungsgemäßen fernoptischen Gerätes parallel zur optischen Achse des Okulars;
- Fig. 4: in einem Schnitt eine Ausführungsform einer abnehmbaren Einheit in abgenommenen Zustand;
- Fig. 5: die Unterseite einer abnehmbaren Einheit.

### Ausführungsbeispiele

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und sind diese bei einer Lageänderung sinngemäß auf die neue Lage zu übertragen.

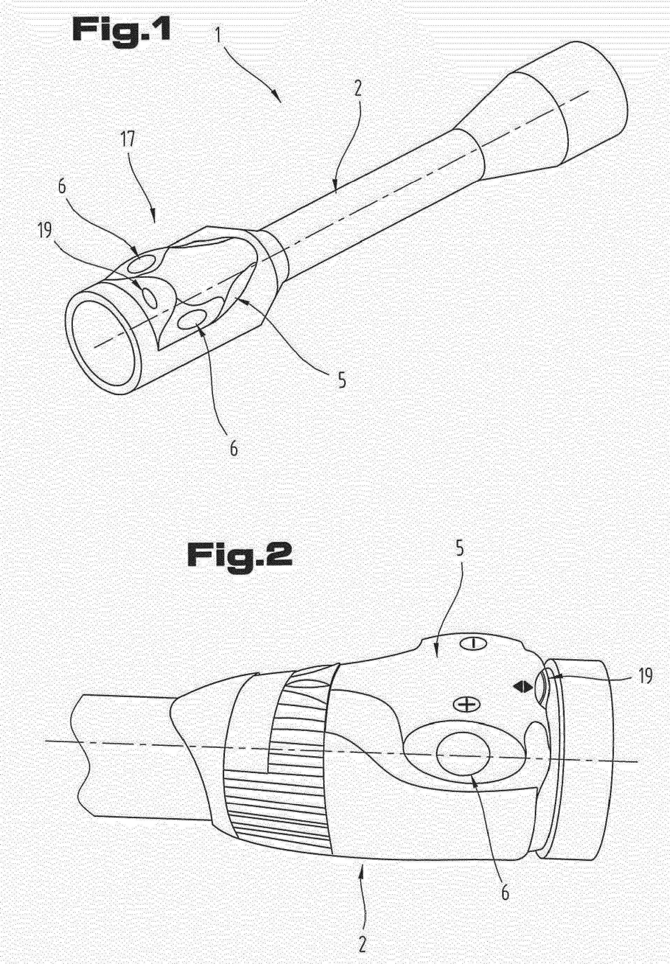

Fig. 1 zeigt ein fernoptisches Gerät 1 in Form eines Zielfernrohres mit einem Grundkörper 2. Am Okularabschnitt 17 sitzt eine vom Grundkörper 2 abnehmbare Einheit 5 mit Bedienelementen 6 und einem Entriegelungsorgan 19 in Form eines Druckknopfes zum Lösen der Verbindung zwischen der abnehmbaren Einheit 5 und dem Grundkörper 2. In der dargestellten Ausführungsform sind zwei gegenüberliegend angeordnete und in Richtung quer zur optischen Achse des Okulars voneinander beabstandete Bedienelemente 6 vorgesehen.

Fig. 2 zeigt den Okularabschnitt 17 eines erfindungsgemäßen fernoptischen Gerätes 1 im Detail, wobei sich die abnehmbare Einheit 5 von Fig. 1 nur durch ihre ergonomische Formgebung unterscheidet.

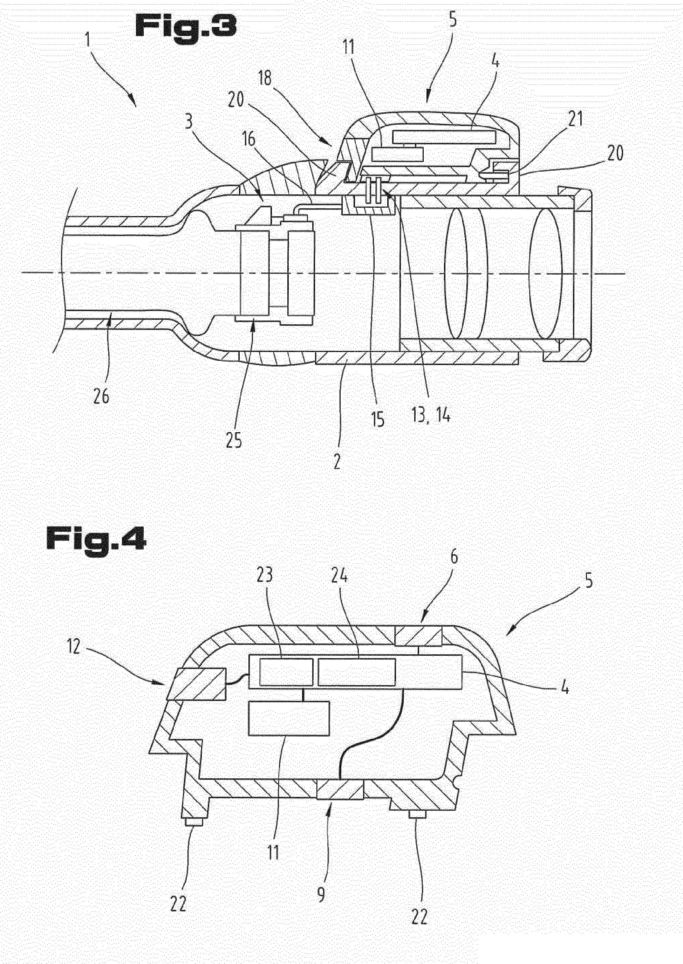

Fig. 3 zeigt den Okularabschnitt 17 eines fernoptischen Gerätes 1 mit einer aufgesetzten abnehmbaren Einheit 5 im Schnitt parallel zur optischen Achse des Okulars. Das Okular wird durch den Grundkörper 2 gehalten. Zu sehen ist hinter dem Okular ein Absehen 25 und ein Umkehrsystem 26. Oberhalb des Absehens 25 ist eine Absehenbeleuchtung 3 angeordnet, deren Licht über eine Einspiegelungseinheit zum Absehen 25 geleitet wird. Die Absehenbeleuchtung 3 ist über eine flexible Platine 16 mit einer Kontaktschnittstelle 14 unter der abnehmbaren Einheit 5 verbunden. Die Platine 16 ist dabei um die das Absehen 25 haltende Absehenfassung gewickelt. Die Kontaktschnittstelle 14 des Grundkörpers 2 ist im aufgesetzten Zustand der abnehmbaren Einheit 5 mit der Kontaktschnittstelle 13 der abnehmbaren Einheit elektrisch leitend verbunden.

Die Kontaktschnittstelle 14 des Grundkörpers 2 weist durch eine Wand des Grundkörpers 2 gehende Kontaktdurchführungen in Form von Kontaktstiften auf, die in eine an der Innenseite der Wand des Grundkörpers 2 angrenzende Fassung 15 ragen, die zusammen mit der Wand des Grundkörpers 2 das Innere des fernoptischen Gerätes 1 nach außen hin abdichtet und dadurch die durch die Kontaktdurchführungen verminderte Dichtigkeit der Wand kompensiert. Die Platine 16 wird im dargestellten Ausführungsbeispiel an einem Ende an der Einspiegelungseinheit und am anderen Ende in der Fassung 15 befestigt. In der Mitte der Fassung 15 befinden sich im Grundkörper 2 Öffnungen nach oben hin, durch welche die an der Platine 16 angebrachten Kontaktstifte nach oben geführt werden. Die Fassung 15 und der Grundkörper 2 bilden eine dichte Einheit, die die Öffnungen nach außen hin gegenüber dem Inneren des fernoptischen Gerätes 1 abdichtet. Wird die Einheit 5 abgenommen, so ist das fernoptische Gerät 1 weiterhin ein dichtes System.

Der Grundkörper 2 weist am Okularabschnitt 17 eine Befestigungsstruktur auf, die die abnehmbare Einheit 5 im aufgesetzten Zustand in einer relativ zum Grundkörper 2 stationären Lage fixiert. In der dargestellten Ausführungsform umfasst die Befestigungsstruktur zwei vom Grundkörper 2 abragende und in Richtung der optischen Achse des Okulars voneinander beabstandete Halteelemente 20, zwischen denen die abnehmbare Einheit 5 stabil und schussfest eingesetzt ist.

Das linke Halteelement 20 (an der Vorderseite der Einheit 5) ist in Form einer schmalen Nase ausgebildet und das rechte Halteelement 20 (an der Hinterseite der Einheit 5) weist einen oder mehrere in Richtung der abnehmbaren Einheit 5 ragenden, vorzugsweise konisch ausgebildeten Befestigungsstift 21 auf, der mit der abnehmbaren Einheit 5 im Bereich ihrer Hinterseite mechanisch zusammenwirkt und diese hält. Der Befestigungsstift 21 sitzt im Grundkörper 2 bzw. in seiner Befestigungsstruktur. Der Befestigungsstift 21 erstreckt sich quer zur Richtung, in der die abnehmbare Einheit 5 abgenommen wird (im dargestellten Beispiel nach oben). Die abnehmbare Einheit 5 sitzt schusssicher zwischen der Nase und den Befestigungsstiften 21.

Mit dieser Befestigungsstruktur zusammenwirkend ist ein an der Vorderseite der abnehmbaren Einheit 5 vorgesehener, lösbarer Verriegelungsmechanismus 18, z.B. ein Schnappmechanismus bzw. ein Clipmechanismus, vorgesehen, über den die abnehmbare Einheit 5 lösbar am Grundkörper 2 befestigbar ist. Zum Lösen des Verriegelungsmechanismus 18 dient das bereits zuvor erwähnte, von außen zugängliche Entriegelungsorgan 19, das beispielsweise einen federbelasteten oder federnden Riegel aus seine Verriegelungsposition abzieht.

In der abnehmbaren Einheit 5 integriert und daher auch mit dieser zusammen vom Grundkörper 2 abnehmbar ist eine Steuerelektronik 4 zur Steuerung eines elektrischen Verbrauchers des fernoptischen Gerätes 1. In der dargestellten Ausführungsform ist in der Einheit 5 weiters eine Energiequelle 11 enthalten. Die Steuerelektronik 4 sitzt vorzugsweise auf einer in der Einheit 5 verbauten Platine, welche mit einem oder mehreren Bedienelementen kommuniziert. Auf der Platine können auch eine oder mehrere Energiequellen 11, insbesondere Batterien, sitzen, welche vorzugsweise beim Abnehmen der Einheit 5 von unten zugänglich werden.

Fig. 4 zeigt eine Ausführungsform der abnehmbaren Einheit 5 mit einem für den Benutzer im aufgesetzten Zustand von außen zugänglichen und mit einer Steuerelektronik 4 zusammenwirkenden Bedienelement 6 zur Aktivierung bzw. Einstellung einer vom elektrischen Verbraucher 3 bewirkten Funktion des fernoptischen Gerätes 1. Dies kann - wie in der dargestellten Ausführungsform - die Aktivierung und Helligkeitsregelung der Absehenbeleuchtung 3 sein. Weiters umfasst die abnehmbare Einheit 5 ein Bedienelement 9 an ihrer Unterseite - das ist die im aufgesetzten Zustand dem Grundkörper 2 zugewandte Seite.

Die Steuerelektronik 4 umfasst eine Datenverarbeitungseinrichtung 24, insbesondere einen Mikroprozessor, und einen Datenspeicher 23. Die Datenverarbeitungseinrichtung 24 und der Datenspeicher 23 können auch zusätzlich bzw. gesondert zur Steuerelektronik 4 vorgesehen sein. Die Datenverarbeitungseinrichtung 24 kann z.B. einen Ballistikrechner beinhalten, über den der Benutzer ausgehend von eingegebenen Daten Informationen über Flugbahn, Einschusswinkel, etc. abrufen kann.

Die in der Fig. 4 dargestellte Ausführungsform umfasst als elektrischen Verbraucher ein Messgerät 12, das insbesondere ein Laser-Entfernungsmesser sein kann. Im Gegensatz zur Absehenbeleuchtung 3 aus Fig. 3 ist das Messgerät 12 in der abnehmbaren Einheit 5 integriert. Es ist selbstverständlich auch möglich, Messgeräte am oder im Inneren des Grundkörpers 2 anzuordnen und nur mit der abnehmbaren Einheit 5 elektrisch zu verbinden. Vorzugsweise ist in der abnehmbaren Einheit 5 eine Auswerteeinheit zur Auswertung der vom Messgerät 12 generierten Messdaten vorgesehen, wobei die Auswertefunktion von der Datenverarbeitungseinrichtung 24 übernommen werden kann.

Zu sehen ist in Fig. 4 auch eine Dichtung 22, die an der Unterseite der abnehmbaren Einheit 5 befestigt ist und im aufgesetzten Zustand am Grundkörper 2 dichtend anliegt. Die Dichtung 22 ist dabei in Form eines elastischen Überzuges, vorzugsweise eines Gummi-Überzuges, auf der abnehmbaren Einheit 5 ausgebildet.

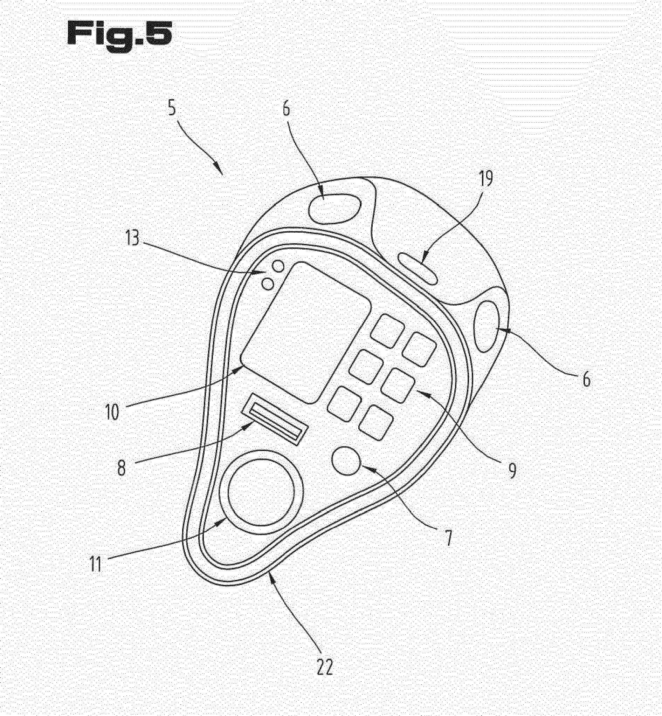

Fig. 5 zeigt die Unterseite, also die dem Grundkörper 2 zugewandte Seite einer bevorzugten abnehmbaren Einheit 5. An dieser befindet sich in aufgesetztem Zustand unzugänglicher und daher vor mechanischen Einwirkungen und Verschmutzungen geschützter Position eine Anzeigevorrichtung 10 in Form eines Displays, Bedienelemente 9 zur Programmierung der Steuerelektronik 4 bzw. der Datenverarbeitungseinrichtung 24, eine Energiequelle 11 in Form einer Batterie oder eines Akkumulators, eine Datenübertragungsschnittstelle 8, eine Ladeschnittstelle 7 zum Aufladen der Energiequelle 11 und eine Kontaktschnittstelle 13 zur elektrischen Verbindung der Steuereinheit 4 mit einem im oder am Grundkörper 2 angeordneten elektrischen Verbraucher, z.B. der bereits erwähnten Absehenbeleuchtung 3. Anzeigevorrichtung 10 und Bedienelemente 9 könnten bevorzugt in einem Touch-Screen vereint sein.

Anstelle einer Datenübertragungsschnittstelle 8 und einer Ladeschnittstelle 7 in Form eines Steckers bzw. einer Buchse können auch drahtlose Schnittstellen (Funkübertragung, induktives Laden) vorgesehen sein.

Am unteren Rand des Gehäuses der abnehmbaren Einheit 5 ist eine umlaufende Dichtung 22 zu sehen, die im aufgesetzten Zustand dichtend am Grundkörper 2 aufsitzt und die Anzeige- und Bedienelemente sowie die Schnittstellen vor unerwünschten Einwirkungen, insbesondere vor Feuchtigkeit und Schmutz schützt.

Wenn die abnehmbare Einheit 5 z.B. zu Wartungs- bzw. Reparaturzwecken nicht zur Verfügung steht, das fernoptische Gerät 1 jedoch mit eingeschränkten Funktionen benutzt werden soll, besteht die Möglichkeit jene Stelle, die ansonsten durch die abnehmbare Einheit 5 verdeckt ist, mittels einer simplen Abdeckung, die ebenfalls mit dem Grundkörper 2 fest verbindbar ist, abzudecken. Die Abdeckung kann dabei ganz ähnliche oder sogar identische Formgebung aufweisen wie die abnehmbare Einheit 5 und schützt die Kontaktschnittstelle 14. Da die Abdeckung keinerlei elektrische Funktionen aufweisen muss, kann sie natürlich auch wesentlich kleiner bzw. flacher ausgebildet werden als die abnehmbare Einheit 5. Vorzugsweise wirkt sie mit demselben Verriegelungsmechanismus 18 zusammen, der auch zur Befestigung der abnehmbaren Einheit 5 dient.

Die Ausführungsbeispiele zeigen mögliche Ausführungsvarianten des fernoptischen Geräts 1, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des fernoptischen Geräts 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

## Patentansprüche

1. Fernoptisches Gerät (1) mit einem Grundkörper (2), mindestens einem elektrischen Verbraucher (3, 12) und einer Steuerelektronik (4) zur Steuerung des elektrischen Verbrauchers (3, 12), wobei die Steuerelektronik (4) in einer auf dem Grundkörper (2) aufgesetzten und von diesem abnehmbaren Einheit (5) integriert ist, wobei die Steuerelektronik (4) im abgenommenen Zustand der abnehmbaren Einheit (5) durch den Benutzer über mindestens ein an der abnehmbaren Einheit (5) angeordnetes Bedienelement (6, 9) programmierbar ist, **dadurch gekennzeichnet, dass** das Bedienelement (9) zur Programmierung der Steuerelektronik (4) auf der im aufgesetzten Zustand dem Grundkörper (2) zugewandten Seite der abnehmbaren Einheit (5) angeordnet ist, und dass in der abnehmbaren Einheit (5) eine Anzeigeeinrichtung (10) integriert ist und die Anzeigeeinrichtung (10) auf der dem Grundkörper (2) zugewandten Seite der abnehmbaren Einheit (5) angeordnet und im aufgesetzten Zustand der abnehmbaren Einheit (5) verdeckt ist.

2. Fernoptisches Gerät nach Anspruch 1, **dadurch gekennzeichnet, dass** in der abnehmbaren Einheit (5) mindestens ein für den Benutzer zugängliches und mit der Steuerelektronik (4) zusammenwirkendes Bedienelement (6) zur Aktivierung bzw. Einstellung einer vom elektrischen Verbraucher (3, 12) bewirkten Funktion des fernoptischen Gerätes (1) integriert ist.

3. Fernoptisches Gerät nach einem der Ansprüche 1 oder 2, **dadurch gekennzeichnet, dass** die abnehmbare Einheit (5) mindestens eine in der Steuerelektronik (4) integrierte Datenverarbeitungseinrichtung (24) umfasst.

4. Fernoptisches Gerät nach Anspruch 3, **dadurch gekennzeichnet, dass** die Datenverarbeitungseinrichtung (24) einen Ballistikrechner beinhaltet.

5. Fernoptisches Gerät nach einem der vorhergehenden Ansprüche, **dadurch gekennzeichnet, dass** die abnehmbare Einheit (5) mindestens einen Datenspeicher (23) umfasst.

6. Fernoptisches Gerät nach einem der vorhergehenden Ansprüche, **dadurch gekennzeichnet, dass** die abnehmbare Einheit (5) mindestens eine Datenübertragungsschnittstelle (8) aufweist, die mit der Steuerelektronik (4) verbunden ist, wobei die Datenübertragungsschnittstelle (8) auf der dem Grundkörper (2) zugewandten Seite der abnehmbaren Einheit (5) angeordnet und im aufgesetzten Zustand der abnehmbaren Einheit (5) unzugänglich ist.

7. Fernoptisches Gerät nach einem der vorhergehenden Ansprüche, **dadurch gekennzeichnet, dass** der elektrische Verbraucher ein Messgerät (12) ist und in der abnehmbaren Einheit (5) eine Auswerteeinheit zur Auswertung der vom Messgerät (12) generierten Messdaten integriert ist.

8. Fernoptisches Gerät nach einem der vorhergehenden Ansprüche, **dadurch gekennzeichnet, dass** der elektrische Verbraucher (3) innerhalb des Grundkörpers (2) angeordnet ist.

9. Fernoptisches Gerät nach einem der vorhergehenden Ansprüche, **dadurch gekennzeichnet, dass** die abnehmbare Einheit (5) und der Grundkörper (2) jeweils eine elektrische Kontaktschnittstelle (13, 14) aufweisen, die im aufgesetzten Zustand der abnehmbaren Einheit (5) zwischen der abnehmbaren Einheit (5) und dem elektrischen Verbraucher (3) eine elektrische Verbindung bilden.

10. Fernoptisches Gerät nach einem der vorhergehenden Ansprüche, **dadurch gekennzeichnet, dass** die abnehmbare Einheit (5) mindestens eine Energiequelle (11) zur Versorgung des elektrischen Verbrauchers (3, 12) enthält, wobei die Energiequelle (11) von der im aufgesetzten Zustand dem Grundkörper (2) zugewandten Seite der abnehmbaren Einheit (5) zugänglich ist.

11. Fernoptisches Gerät nach Anspruch 10 **dadurch gekennzeichnet, dass** die Energiequelle (11) ein Akkumulator ist und die abnehmbare Einheit (5) eine mit dem Akkumulator verbundene Ladeschnittstelle (7) für eine Ladevorrichtung aufweist, wobei die Ladeschnittstelle (7) auf der dem Grundkörper (2) zugewandten Seite der abnehmbaren Einheit (5) angeordnet und im aufgesetzten Zustand der abnehmbaren Einheit (5) unzugänglich ist.

12. Fernoptisches Gerät nach einem der vorhergehenden Ansprüche, **dadurch gekennzeichnet, dass** die abnehmbare Einheit (5) im Bereich des Okulars, an einem Okularabschnitt (17) des fernoptischen Gerätes (1), angeordnet ist.

13. Fernoptisches Gerät nach einem der vorhergehenden Ansprüche, **dadurch gekennzeichnet, dass** die abnehmbare Einheit (5) in dem am Grundkörper (2) aufgesetzten Zustand in einer vom Grundkörper (2) gebildeten Befestigungsstruktur eingesetzt ist und dort eine relativ zum Grundkörper (2) unveränderbare Lage einnimmt.

## Claims

1. A far-optical device (1) with a base body (2), at least one electrical load (3, 12) and a control electronics (4) for controlling the electrical load (3, 12), wherein the control electronics (4) is integrated in a unit (5) which is attached to the base body (2) and which is detachable from the same, wherein the control electronics (4) can be programmed by the user in the detached state of the detachable unit (5) via at least one operating element (6,9) arranged at the detachable unit (5), **characterized in that** the operating element (9) for programming the control electronics (4) is arranged on the side of the detachable unit (5) facing the base body (2) in its attached state, and that a display device (10) is integrated in the detachable unit (5), wherein the display device (10) is arranged on the side of the detachable unit (5) facing the base body (2) and is covered when the detachable unit (5) is in its attached state.

2. The far-optical device according to claim 1, **characterized in that** at least one operating element (6) is integrated in the detachable unit (5), wherein said operating element (6) is accessible to the user, cooperates with the control electronics (4) and serves to activate or set a function of the far-optical device (1) effected by the electrical load (3, 12).

3. The far-optical device according to one of claim 1 or 2, **characterized in that** the detachable unit (5) comprises at least one data processing device (24) integrated in the control electronics (4).

4. The far-optical device according to claim 3, **characterized in that** the data processing device (24) includes a ballistics computer.

5. The far-optical device according to one of the preceding claims, **characterized in that** the detachable unit (5) comprises at least one data storage device (23).

6. The far-optical device according to one of the preceding claims, **characterized in that** the detachable unit (5) comprises at least one data communications interface (8), which is connected to the control electronics (4), wherein the data communications interface (8) is arranged on the side of the detachable unit (5) facing the base body (2) and is inaccessible when the detachable unit (5) is in its attached state.

7. The far-optical device according to one of the preceding claims, **characterized in that** the electrical load is a measuring device (12), and that a processing unit for evaluating the measurement data generated by the measuring device (12) is integrated in the detachable unit (5).

8. The far-optical device according to one of the preceding claims, **characterized in that** the electrical load (3) is arranged inside the base body (2).

9. The far-optical device according to one of the preceding claims, **characterized in that** the detachable unit (5) and the base body (2) each have an electrical contact interface (13, 14), which form an electrical connection between the detachable unit (5) and the electrical load (3) when the detachable unit (5) is in its attached state.

10. The far-optical device according to one of the preceding claims, **characterized in that** the detachable unit (5) includes at least one energy source (11) for supplying the electrical load (3, 12), wherein the energy source (11) is accessible from the side of the detachable unit (5) facing the base body (2) in its attached state.

11. The far-optical device according to claim 10, **characterized in that** the energy source (11) is a rechargeable battery and that the detachable unit (5) has a charging interface (7) for the charging device, wherein the charging interface (7) is connected to the rechargeable battery and wherein the charging interface (7) is arranged on the side of the detachable unit (5) facing the base body (2) and is inaccessible when the detachable unit (5) is in its attached state.

12. The far-optical device according to one of the preceding claims, **characterized in that** the detachable unit (5) is arranged in the area of the eyepiece, at the eyepiece portion (17) of the far-optical device (1).

13. The far-optical device according to one of the preceding claims, **characterized in that** the detachable unit (5) in its state attached to the base body (2) is inserted into a fastening structure formed by the base body (2), wherein the detachable unit (5) is unmovable relative to the base body (2) in said position.

## Revendications

1. Appareil de téléoptique (1) avec un corps de base (2), au moins un consommateur électrique (3, 12) et une électronique de commande (4) pour la commande du consommateur électrique (3, 12), l'électronique de commande (4) étant intégrée dans une unité (5) posée sur le corps de base (2) et pouvant être retirée de celui-ci, l'électronique de commande (4) pouvant être programmée, lorsque l'unité amovible (5) est retirée, par l'utilisateur par l'intermédiaire d'au moins un élément de commande (6, 9) disposé sur l'unité amovible (5), **caractérisé en ce que** l'élément de commande (9) est disposé, pour la programmation de l'électronique de commande (4), sur le côté de l'unité amovible (5) orienté vers le corps de base (2) lorsqu'elle est posée sur celui-ci et **en ce que**, dans l'unité amovible (5), est intégré un dispositif d'affichage (10) et le dispositif d'affichage (10) est disposé sur le côté de l'unité amovible (5) orienté vers le corps de base (2) et est dissimulé lorsque l'unité amovible (5) est posée.

2. Appareil de téléoptique selon la revendication 1, **caractérisé en ce que**, dans l'unité amovible (5), au moins un élément de commande (6) accessible à l'utilisateur et interagissant avec l'électronique de commande (4) est intégré pour l'activation ou le réglage d'une fonction, remplie par le consommateur électrique (3, 12), de l'appareil de téléoptique (1).

3. Appareil de téléoptique selon l'une des revendications 1 ou 2, **caractérisé en ce que** l'unité amovible (5) comprend au moins un dispositif de traitement de données (24) intégré dans l'électronique de commande (4).

4. Appareil de téléoptique selon la revendication 3, **caractérisé en ce que** le dispositif de traitement de données (24) contient un calculateur balistique.

5. Appareil de téléoptique selon l'une des revendications précédentes, **caractérisé en ce que** l'unité amovible (5) comprend au moins une mémoire de données (23).

6. Appareil de téléoptique selon l'une des revendications précédentes, **caractérisé en ce que** l'unité amovible (5) comprend au moins une interface de transmission de données (8) qui est reliée à l'électronique de commande (4), l'interface de transmission de données (8) étant disposée sur le côté de l'unité amovible (5) orienté vers le corps de base (2) et étant inaccessible lorsque l'unité amovible (5) est posée.

7. Appareil de téléoptique selon l'une des revendications précédentes, **caractérisé en ce que** le consommateur électrique est un appareil de mesure (12) et, dans l'unité amovible (5) est intégrée une unité d'analyse pour l'analyse des données de mesure générées par l'appareil de mesure (12).

8. Appareil de téléoptique selon l'une des revendications précédentes, **caractérisé en ce que** le consommateur électrique (3) est disposé à l'intérieur du corps de base (2).

9. Appareil de téléoptique selon l'une des revendications précédentes, **caractérisé en ce que** l'unité amovible (5) et le corps de base (2) comprennent chacun une interface de contact électrique (13, 14) qui forme, lorsque l'unité amovible (5) est posée, une liaison électrique entre l'unité amovible (5) et le consommateur électrique (3).

10. Appareil de téléoptique selon l'une des revendications précédentes, **caractérisé en ce que** l'unité amovible (5) contient au moins une source d'énergie (11) pour l'alimentation du consommateur électrique (3, 12), la source d'énergie (11) étant accessible à partir du côté de l'unité amovible (5) orienté vers le corps de base (2) lorsqu'elle est posée sur celui-ci.

11. Appareil de téléoptique selon la revendication 10, **caractérisé en ce que** la source d'énergie (11) est un accumulateur et l'unité amovible (5) comprend une interface de charge (7) reliée à l'accumulateur pour un dispositif de charge, l'interface de charge (7) étant disposée sur le côté de l'unité amovible (5) orienté vers le corps de base (2) et étant inaccessible lorsque l'unité amovible (5) est posée.

12. Appareil de téléoptique selon l'une des revendications précédentes, **caractérisé en ce que** l'unité amovible (5) est disposée au niveau de l'oculaire, sur une portion d'oculaire (17) de l'appareil de téléoptique (1).

13. Appareil de téléoptique selon l'une des revendications précédentes, **caractérisé en ce que** l'unité amovible (5) est insérée, lorsqu'elle est posée sur le corps de base (2), dans une structure de fixation constituée du corps de base (2) et y adopte une position fixe par rapport au corps de base (2).
